# EUROPÄISCHE PATENTSCHRIFT

(11) **EP 2 921 674 B1**
(45) Veröffentlichungstag und Bekanntmachung des Hinweises auf die Patenterteilung: **10.05.2017**
(21) Anmeldenummer: 15000392.9
(22) Anmeldetag: 10.02.2015
(51) Int. Cl.: F02N 19/00, F02D 41/00, F02D 19/02, F02M 21/02

(54) **Gasmotoranordnung**
Gas engine assembly
Système de moteur à gaz

(30) Priorität: 20.03.2014 DE 102014004013
(43) Veröffentlichungstag der Anmeldung: 23.09.2015
(73) Patentinhaber: MTU FRIEDRICHSHAFEN GMBH, 88045 Friedrichshafen (DE)
(72) Erfinder: Prunnbauer, Jan, 88131 Lindau (DE); Matthies, Jörg, 88682 Salem (DE)
(74) Vertreter: RRPS European Patent Attorneys

(56) Entgegenhaltungen:
- JP-A- S61 229 966
- US-A1- 2005 133 008

## Beschreibung

Die vorliegende Erfindung betrifft eine Gasmotoranordnung gemäß dem Oberbegriff von Anspruch 1.

Gasmotoren, insbesondere solche, welche mobil, zum Beispiel in Anwendungsumgebungen wie Schiffen, Nutzfahrzeugen und dergleichen, eingesetzt werden, unterliegen im Hinblick auf Notstoppsituationen der Anforderung, einen sicheren Betriebszustand im Zuge des Abstellens einzunehmen. Dies erzwingt in der Regel ein Spülen des Gasrails und dessen Zulaufs mit Inertgas.

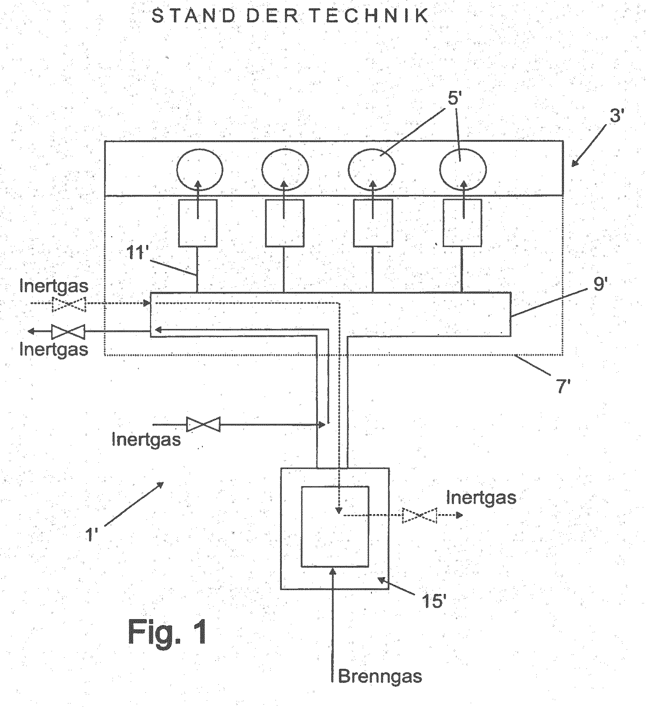

Fig. 1 zeigt Lösungen gemäß dem Stand der Technik, bei welchen ersichtlich ein hoher Aufwand für ein solches Spülen zu betreiben ist, insoweit als es hierbei regelmäßig erforderlich ist, die das Kraftstoffsystem 7' des Gasmotors 3' und dessen Gasrail 9' schützend umgebende Doppelwand 7a' mehrfach zu durchbrechen, woneben in nachteilig aufwändiger Weise auch eine Vielzahl von Ventilen zu installieren ist, um den Anforderungen an die beabsichtigte Spülfunktionalität gerecht zu werden.

Bei einer ersten Lösung aus dem Stand der Technik (siehe Zum Beispiel JP S61 229966 A) gemäß Fig. 1 (durchgezogene Inertgas-Pfeile) wird das Inertgas in einen Anströmpfad des Gasrails 9' eingebracht (erstes Ventil) und bei Bedarf aus dem Rail 9' durch die hierbei durchbrochende Doppelwand 7a' abgeführt (zweites Ventil). Einhergeht hiermit ersichtlich ein hoher baulicher Aufwand, insbesondere in Bezug auf die Durchbrechung und Abdichtung an der Doppelwand 7a' (gerade auch für eine hierbei notwendige Durchführung von Steuerleitungen).

Bei einer zweiten Variante nach dem Stand der Technik gemäß Fig. 1 (gestrichelte Inertgas-Pfeile) wird das Inertgas durch die hierfür wiederum durchbrochene Doppelwand 7a' unmittelbar an dem Gasrail 9' eingebracht (erstes Ventil) und nachfolgend über die Gasregelstrecke 15' freigesetzt (zweites Ventil). Auch bei dieser Lösung treten vorstehend benannte Nachteile in gleicher Weise auf.

Ausgehend hiervon liegt der vorliegenden Erfindung die Aufgabe zu Grunde, eine Gasmotoranordnung vorzuschlagen, welche mit verringertem Bau- bzw. Fertigungsaufwand für ein Brenngasausspülen bei vorteilhaft robuster Ausbilung sowie hoher Standfestigkeit einhergeht, woneben auch ein zuverlässiger Motorstart gewährleistet ist.

Diese Aufgabe wird durch eine Gasmotoranordnung mit den Merkmalen des Anspruchs 1 gelöst.

Vorteilhafte Weiterbildungen und Ausführungsformen der Erfindung sind in den weiteren Ansprüchen angegeben.

Erfindungsgemäß wird eine Gasmotoranordnung mit einem Gasmotor vorgeschlagen, welcher bevorzugt mit einem Brenngas in z.B. Form von Erdgas oder Biogas, z.B. auch Synthesegas oder Sondergas betreibbar ist. Ein solcher Gasmotor ist im Rahmen der Erfindung bevorzugt ein Großmotor mit insbesondere einer Mehrzahl von Zylindern, z.B. mit 8 bis 20 Zylindern. Anwendung findet die Gasmotoranordnung bevorzugt in mobilen Umgebungen wie auf Kraftfahrzeugen in Form von zum Beispiel Schiffen oder Nutzfahrzeugen. Daneben sind aber auch stationäre Anwendungen in Anlagen zur Erzeugung elektrischer Energie, insbesondere in Anlagen mit Kraft-Wärme-Kopplung (zum Beispiel Blockheizkraftwerken) oder Kraft-Wärme-Kälte-Kopplung, in Industrieanwendungen, etc. denkbar. Die Erfindung kann sowohl mit Fremd- als auch mit selbstgezündeten Gasmotoren sowie solchen, welche eine Kombination beider Zündungsarten vorsehen, angewendet werden.

Die vorgeschlagene Gasmotoranordnung umfasst ein Gas-Rail (Gas-Sammelschiene bzw. Gas-Sammeldruckspeicher), über welches Gas-Rail ein erstes Gas in Form von Brenngas, insbesondere niederdruckbeaufschlagt, an wenigstens eine Gasdosiervorrichtung des Gasmotors versorgbar bzw. zuführbar ist. Eine Gasdosiervorrichtung kann allgemein zum Beispiel als Gas-Einblasventil ausgeführt sein, zum Beispiel als Magnetventil, insbesondere zum Beispiel für eine Saugrohreinblasung. Allgemein ist eine Gas-Dosiervorrichtung im Rahmen der vorliegenden Erfindung bereitgestellt, um in einem zugeordneten Brennraum des Gasmotors ein zündfähiges Gemisch zu bilden. Eine jeweilige Gas-Dosiervorrichtung kann bevorzugt über eine Stichleitung seitens des Gas-Rails versorgt bzw. angeströmt werden.

Die Gasmotoranordnung weist weiterhin eine Gasregelstrecke auf, welche eingerichtet ist, Brenngas über einen - mit Bezug auf die Gasregelstrecke - abströmseitigen Versorgungspfad an das Gas-Rail zu versorgen. Bevorzugte Ausgestaltungen können hierbei vorsehen, den Versorgungspfad mittels eines Schlauches bzw. einer Schlauchverbindung zu realisieren, alternativ zum Beispiel mittels eines Rohres oder Rohrstücks, allgemein z.B. in Form einer Leitung.

Die Gasregelstrecke kann auf an sich bekannte Weise zum Beispiel einen Gasfilter, Absperrventile sowie eine Druckregeleinrichtung aufweisen (zum Beispiel gebildet mittels eines Druckminderers), weiterhin zum Beispiel eine Dichtheitsprüfeinrichtung. Anströmseitig kann die Gasregelstrecke über einen Brenngas-Einlass angeströmt werden, in mobilen Anwendungsumgebungen insbesondere ausgehend von einem Brenngasvorrat, z.B. einem Drucktank.

Die erfindungsgemäße Gasmotoranordnung weist in kennzeichnender Weise eine Spülleitung auf, welche in das Gas-Rail geführt ist, d.h. insbesondere in das Innere des Gas-Rails, wobei die Gasmotoranordnung weiterhin eingerichtet ist, selektiv bzw. wahlweise Brenngas oder ein zweites Gas, insbesondere Inertgas, an die Spülleitung zu versorgen. Erfindungsgemäß ist die Gasmotoranordnung hierbei weiterhin auch eingerichtet, mit der bzw. im Zuge einer Versorgung des Brenngases oder zweiten Gases an die Spülleitung Gas (i.e. fallweise Brenngas oder zweites Gas) aus dem Gas-Rail zu verdrängen und über den Versorgungspfad abzuführen (d.h. in rückwärtiger Richtung bzw. hin zu der Gasregelstrecke). Bevorzugt kann mit der Erfindung ein Verdrängen von Gas aus dem Gas-Rail dergestalt vorgesehen sein, dass die Versorgung des einen Gases, i.e. des ersten oder zweiten Gases, an die Spülleitung eingestellt wird, sobald das andere, i.e. das zweite oder erste Gas, vollständig aus dem Gas-Rail (als auch aus dem Versorgungspfad) verdrängt ist (und über den Versorgungspfad abgeführt wurde, bevorzugt hin zur Gasregelstrecke).

Die derart ausgestaltete Gasmotoranordnung ermöglicht - via die in das Gas-Rail geführte Spülleitung (welche aufgrund ihrer Anordnung im Gas-Rail ein zuverlässiges Spülen auch in potentiellen Totbereichen des Rails ermöglicht) - einerseits das einfache und baulich vorteilhaft unaufwändige Einbringen eines zweiten Gases in das Gas-Rail unter Verdrängung des Brenngases aus dem Gas-Rail. Zum zweiten kann mit der vorgeschlagenen Lösung das Brenngas auch in beabsichtigter Weise aus dem zum Rail geführten Versorgungspfad verdrängt werden, erfindungsgemäß über die Gasregelstrecke abgeführt und von derselben insbesondere freigesetzt werden (z.B. an die Atmosphäre, z.B. über einen Schiffskamin, oder alternativ z.B. in einen Tank). Somit ist es der Gasmotoranordnung auf vorteilhaft einfache Weise ermöglicht, im Zuge eines Außer-Betrieb-Setzens des Gasmotors zügig einen sicheren Betriebszustand einzunehmen, das heißt im Zuge eines Spülens des Gasmotors samt Zulauf über die Spülleitung, bei welchem das Brenngas mittels des zweiten Gases aus dem Gas-Rail verdrängt wird, insbesondere im Falle einer Notaus- bzw. Notstopp-Situation.

Besonders bevorzugte Ausgestaltungen der Gasmotoranordnung sehen hierbei vor, dass die Spülleitung in den Versorgungspfad einzweigt, d.h. insbesondere zwischen der Gasregelstrecke (an deren Abströmseite) und dem Rail (an dessen Anströmseite) bzw. über den Versorgungspfad (z.B. von der Einzweigstelle) in das Rail bzw. dessen Inneres geführt ist. Bevorzugt sind hierbei Lösungen, bei welchen der Versorgungspfad lediglich einfach umwandet ausgeführt ist und/oder am Ort einer Einzweigung der Spülleitung einfach umwandet ausgeführt ist. Hierdurch ist die Anbindung der Spülleitung baulich äußerst unaufwändig realisierbar.

Weiterhin bevorzugte Ausgestaltungen sehen vor, dass die Gasmotoranordnung eingerichtet ist, aus dem Gas-Rail verdrängtes und über den Versorgungspfad abgeführtes Gas (erstes bzw. zweites Gas) weiterhin - wie oben bereits erwähnt - über die Gasregelstrecke freizusetzen, bevorzugt z.B. in die Umgebung bzw. Atmosphäre. Hierzu kann die Gasregelstrecke eine Abströmungvorrichtung vorsehen, insbesondere gebildet mittels eines Abblasventils.

Bevorzugt ist das zweite Gas (insbesondere Stickstoff bzw. N₂, z.B. auch CO₂ oder intertes Abgas) insbesondere druckbeaufschlagt an die Spülleitung versorgbar, bevorzugt aus einem Druckgasvorrat. Ein solcher Gasvorrat kann zum Beispiel mittels einer oder mehrerer Druckgasflaschen bereitgestellt sein, zum Beispiel auch gebildet mittels eines Sammelbehältnisses, in welches z.B. aus der Umgebungsluft separiertes zweites Gas eingebracht wird (insbesondere druckbeaufschlagt).

Im Rahmen der Erfindung vorgesehen ist darüber hinaus, dass die Gasmotoranordnung eine Ventilvorrichtung aufweist, insbesondere in Form eines einzigen Ventils, über welche (und jeweilige daran geführte Versorgungsleitungen für Brenngas bzw. zweites Gas (ausgehend von z.B. o.a. Vorrat)) das erste und alternativ das zweite Gas an die Spülleitung (deren anströmseitigen Einlass) selektiv versorgbar ist. Eine solche Ventilvorrichtung kann zum Beispiel mittels eines Kugelhahns gebildet sein, allgemein z.B. mittels eines 3/3-Wege-Ventils.

Bevorzugt ist die Ventilvorrichtung zur Einnahme dreier (Ventil)Stellungen in der Lage, wobei die Gasmotoranordnung weiterhin bevorzugt eingerichtet ist, in einer ersten Stellung der Ventilvorrichtung Brenngas an die Spülleitung zu versorgen, in einer zweiten Stellung der Ventilvorrichtung das zweite Gas bzw. Inertgas an die Spülleitung zu versorgen und wobei eine dritte Stellung der Ventilvorrichtung einer Sperrstellung entspricht (in welcher sowohl die Brenngas- als auch die Versorgung mit zweitem bzw. Inertgas gesperrt ist und in welcher die Spülleitung einlassseitig nicht angeströmt wird). Diese Lösung erlaubt eine vorteilhaft unaufwändige und robuste Ausgestaltung der Gasmotoranordnung für das beabsichtigte Spülen.

Ein besonders einfaches Spülen des Gas-Rails mit dem zweiten Gas bzw. Inertgas kann bei einer Gasmotoranordnung gemäß der Erfindung erfolgen, bei welcher die Gasregelstrecke über eine Absperrvorrichtung anströmseitig absperrbar ist (die Absperrvorrichtung ist zum Beispiel und bevorzugt eine (einlassseitige) Hauptabsperrvorrichtung (main-guard-valve) der Gasregelstrecke) und wobei die Gasmotoranordnung weiterhin eingerichtet ist - insbesondere im Zuge eines Außer-Betrieb-Setzens - zunächst die Absperrvorrichtung in Sperrstellung zu schalten (und bevorzugt weiterhin die Abströmvorrichtung der Gasregelstrecke zu öffnen (so dass das Gas-Rail samt Versorgungspfad drucklos wird)). Darauf folgend kann die Gasmotoranordnung die Ventilvorrichtung für das Spülen auf das zweite Gas bzw. in die zweite Stellung umschalten, so dass das zweite Gas (aus z.B. dem Druckgasvorrat) über die Ventilvorrichtung (und über die Versorgungsleitung) an die Spülleitung versorgt werden kann (wobei ein Spülen insbesondere mit vorteilhaft geringem Niederdruck ermöglicht ist).

Bei der Ausgestaltung der Gasmotoranordnung gemäß der Erfindung, wobei das zweite Gas ebenfalls vorteilhaft unaufwändig mittels Brenngas auch wieder aus dem Gas-Rail verdrängt wird (insbesondere für eine Wiederinbetriebnahme des Gasmotors) und wobei die Gasregelstrecke wie vorstehend beschrieben über eine Absperrvorrichtung anströmseitig absperrbar ist, sieht vor, dass stromaufwärts der Absperrvorrichtung weiterhin erfindungsgemäß ein Brenngaszweig an die Ventilvorrichtung geführt abzweigt (welcher insbesondere die an die Ventilvorrichtung geführte Versorgungsleitung für Brenngas bildet), d.h. insbesondere derart, dass Brenngas mit einem Versorgungsdruck (Quellendruck) an die Spülleitung anschaltbar ist. Hierdurch wird eine separate Druckerzeugung(svorrichtung) für die Druckbeaufschlagung des Brenngases bei Motorstillstand für die Verdrängung bzw. das Spülen vorteilhaft entbehrlich. Um das zweite Gas zu verdrängen, ist die Gasmotoranordnung hierbei bevorzugt eingerichtet, die Absperrvorrichtung zunächst in Sperrstellung zu schalten und das Brenngas über den Brenngaszweig und die Ventilvorrichtung an die Spülleitung zu versorgen (insbesondere in der ersten Ventilstellung). Hierbei ist bevorzugt wiederum ein Abströmen des verdrängten Gases über die Gasregelstrecke und die (hierfür geöffnete) Abströmvorrichtung ermöglicht.

Mit der derart eingerichteten Gasmotoranordnung kann somit auf vorteilhaft einfache Weise eine Wiederbefüllung des Gas-Rails mit Brenngas erfolgen, so dass eine zuverlässige Zündung bzw. Inbetriebnahme des Gasmotors gewährleistet ist. Nach der erfolgten Wiederbefüllung kann die Ventilvorrichtung nunmehr in Sperrstellung geschaltet werden (so dass auch ein Abströmen von Brenngas in Richtung zu dem bzw. aus dem Spülleitungseinlass nachfolgend vermieden ist) und anschließend die Absperrvorrichtung wieder geöffnet werden. Bei bevorzugten Ausgestaltungen weist die Gasmotoranordnung insoweit auch diese Funktionalität auf.

Im Rahmen der vorliegenden Erfindung ist es bevorzugt auch vorgesehen, dass die Absperrvorrichtung stromlos sperrt und/oder die Ventilvorrichtung stromlos in die zweite Stellung schaltet und/oder die Abströmvorrichtung stromlos öffnet, d.h. bei einem Außer-Betrieb-Setzen des Gasmotors. Hierdurch wird ein zuverlässiges selbsttätiges Verdrängen von Brenngas aus dem Gas-Rail im Falle eines Stromausfalls oder eines Notstopps gewährleistet. Insbesondere ist die Gasmotoranordnung bei einer derartigen Ausgestaltung eingerichtet, bei einer Unterbrechung der Stromversorgung und/oder einem Außerbetriebsetzen (Notstopp) eine Kommunikationsverbindung von der (druckbeaufschlagten) Gasversorgung des zweiten Gases über die Spülleitung, das Rail sowie den Versorgungspfad (sowie bevorzugt die Gasregelstrecke und die Abströmvorrichtung) an die Umgebung zu schalten, i.e. stromlos bzw. selbsttätig.

Allgemein bevorzugt kann die Gasmotoranordnung für eine Steuerung der Gasversorgung (Brenngas oder zweites Gas) an das Gas-Rail über die Spülleitung eine Gassensorik aufweisen oder für eine Zeitsteuerung eingerichtet sein. Eine solche kann mit einer übergeordneten Steuerung verbunden sein, welche in Abhängigkeit eines entsprechenden Signals der Sensorik bzw. Zeitsteuerung (detektiertes Brenngas, verstrichene Zeit) ein (Um)Schalten der Ventilvorrichtung und/oder der Absperrvorrichtung und/oder der Abströmvorrichtung veranlasst.

Mit der Erfindung wird auch ein Verfahren zur Ausführung mit einer wie vorstehend erläuterten Gasmotoranordnung vorgeschlagen, wobei zur Einnahme eines sicheren Motorzustands im Zuge eines Außerbetriebsetzens in einem ersten Schritt eine gasregelstreckenseitige Brenngasversorgung an das Gas-Rail unterbrochen wird, z.B. insbesondere via die Absperrvorrichtung.

Bevorzugt wird damit einhergehend (oder in einem separaten Schritt) auch die Abströmvorrichtung geöffnet bzw. das Gas-Rail samt Versorgungspfad drucklos geschaltet.

In einem zweiten Schritt wird nachfolgend das zweite Gas (Inertgas) an die Spülleitung versorgt und Brenngas aus dem Gas-Rail verdrängt und über den Versorgungspfad abgeführt (sowie bevorzugt über die Gasregelstrecke (in rückwärtiger Richtung) und weiterhin insbesondere über deren Abströmvorrichtung an die Atmosphäre). Das Verdrängen kann - insbesondere bei vorhandener Bestromung - wie vorstehend erwähnt mittels einer Gassensorik oder zum Beispiel zeitgesteuert detektiert bzw. gesteuert werden. Vorgesehen ist bevorzugt, das Verdrängen des Brenngases zu beenden, sobald das Gas-Rail (und bevorzugt auch der Versorgungspfad sämtlich) mit dem zweiten Gas befüllt ist (wobei ein Inertgas-Vorrat nicht unnötig leerläuft).

Vorgeschlagen wird auch ein Verfahren zur Ausführung mit einem wie oben erläuterten Gasmotor, wobei zur Inbetriebnahme des Gasmotors Brenngas an die Spülleitung versorgt wird (insbesondere über die Brenngaszweigleitung), so dass Gas, insbesondere zweites Gas (Inertgas), aus dem Gas-Rail verdrängt wird (und über den Versorgungspfad abgeführt wird (sowie bevorzugt über die Gasregelstrecke (in rückwärtiger Richtung) und weiterhin insbesondere über deren geöffnete Abströmvorrichtung an die Atmosphäre))). Das Verdrängen bzw. Spülen kann beendet werden, sobald das Gas-Rail (und bevorzugt auch der Versorgungspfad sämtlich) mit dem Brenngas befüllt sind.

Nach Verdrängen des Gases mittels des Brenngases kann nunmehr in einem zweiten Schritt Brenngas über die Gasregelstrecke und den Versorgungspfad an das Gas-Rail versorgt werden (Absperrvorrichtung geöffnet). Bevorzugt ist hierbei vorgesehen, dass nach Verdrängen des Gases aus dem Gas-Rail die Brenngasversorgung an die Spülleitung beendet wird und/oder die Ventilvorrichtung in Sperrstellung geschaltet wird. Das Wiederbefüllen mit Brenngas kann wie vorstehend erwähnt wiederum mittels einer Gassensorik oder zum Beispiel zeitgesteuert detektiert bzw. gesteuert werden.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch eine Gasmotoranordung mit einer ersten und einer zweiten veranschaulichten Lösung für ein Spülen gemäß dem Stand der Technik.
- Fig. 2: exemplarisch und schematisch eine Gasmotoranordung gemäß einer möglichen Ausführungsform der Erfindung.
- Fig. 3: exemplarisch und schematisch ein Ablaufdiagramm eines mit der erfindungsgemäßen Gasmotoranordung im Rahmen eines Außer-Betrieb-Setzens durchführbaren Verfahrens.
- Fig. 4: exemplarisch und schematisch ein Ablaufdiagramm eines mit der erfindungsgemäßen Gasmotoranordung im Rahmen einer Inbetriebnahme durchführbaren Verfahrens.

In der nachfolgenden Beschreibung und den Zeichnungen entsprechen gleichen Bezugszeichen Elemente gleicher oder vergleichbarer Funktion.

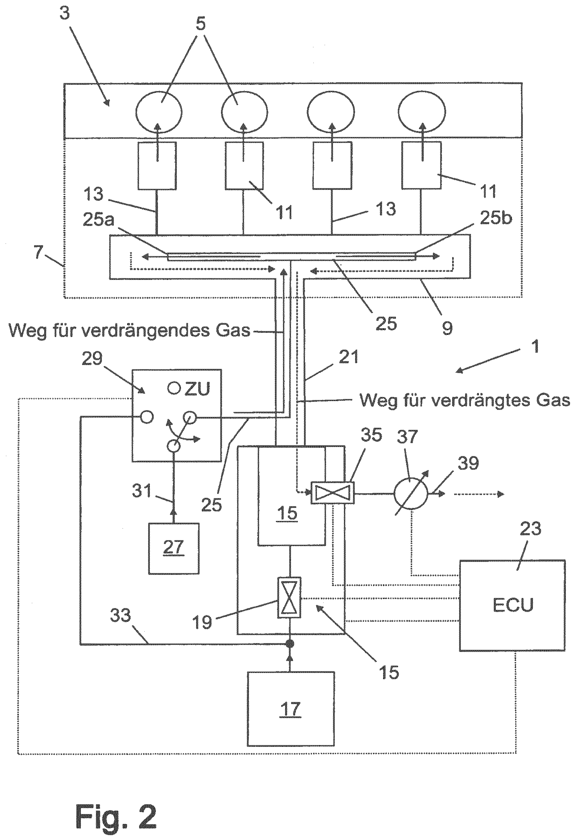

**Fig. 2** zeigt exemplarisch eine erfindungsgemäße Gasmotoranordnung 1 mit einem Gasmotor 3, welcher mit einer Mehrzahl von Zylindern 5 gebildet ist. Wie gestrichelt eingezeichnet, ist ein Kraftstoffsystemteil 7 des Gasmotors 3 sowie ein Gas-Rail 9 desselben hierbei doppelwandig gekapselt, um den daran gestellten Betriebsschutzauflagen gerecht zu werden.

Über das Gas-Rail 9 (Gas-Sammelschiene) des Gasmotors 3 ist ein erstes Gas bzw. Brenngas (zum Beispiel Erdgas, Biogas, etc.) an eine Gasdosiervorrichtung 11 eines jeweiligen Zylinders 5 bzw. an eine Mehrzahl von Gas-Dosiervorrichtungen 11 des Gasmotors 3 versorgbar. Die Gas-Dosiervorrichtungen 11 sind als Gaseinblasventile, insbesondere als Magnetventile, bereitgestellt, um in einem Brennraum eines jeweiligen Zylinders 5 ein zündfähiges Gemisch zu erzeugen. Eine jeweilige Gas-Dosiervorrichtungen 11 ist über eine Stichleitung 13 seitens des Gas-Rails 9 anströmbar.

Zur Versorgung des Gas-Rails 9 mit niederdruckbeaufschlagtem Brenngas im Rahmen eines Motorbetriebs weist die Gasmotoranordnung 1 weiterhin eine hierfür eingerichtete Gasregelstrecke 15 auf. Die Gasregelstrecke 15 ist einlassseitig seitens einer Brenngas-Versorgung 17 mit druckbeaufschlagtem Brenngas anströmbar, wobei das Brenngas zum Beispiel einer Quelle (z.B. bei Anschluss an einem (Erd-)Gasversorgungsnetz) oder einem Brenngasvorrat entnommen werden kann (zum Beispiel bei einem Einsatz des Gasmotors 3 in einem Fahrzeug).

Stromabwärts des Brenngas-Einlasses weist die Gasregelstrecke 15 eine Absperrvorrichtung 19 auf (Haupthahn; Master Gas Valve), an welche sich weitere Komponenten der Gasregelstrecke 15 in Gas-Strömungsrichtung anschließen (nicht dargestellt), zum Beispiel ein Filter, ein Druckminderer, ein oder mehrere Druckwächter, Ventile, eine Kontrolleinrichtung, ein Kompensator, etc.).

Eine Abströmseite der Gasregelstrecke 15 ist über einen Versorgungspfad 21, welcher bevorzugt mittels eines Schlauches gebildet ist, allgemein mittels einer Leitung, mit dem Gas-Rail 9 weiterhin kommunizierend verbunden, d.h. derart, dass von der Gasregelstrecke 15 geeignet aufbereitet zur Verfügung gestelltes Brenngas, über den Versorgungspfad 21 an das Gas-Rail 9 versorgbar bzw. zuführbar ist.

Wie in Fig. 2 veranschaulicht, weist die Gasmotoranordnung 1 weiterhin eine Steuervorrichtung 23 auf (ECU), welche die Gasregelstrecke 15, insbesondere auch die Absperrvorrichtung 19, beherrscht (gestrichelte Steuerleitungen). Die Steuervorrichtung 23 kann als Anlagensteuerung bereitgestellt sein, zum Beispiel auch in einem Motorsteuergerät implementiert sein.

Wie Fig. 2 weiter veranschaulicht, ist bei der Gasmotoranordnung 1 in erfindungsgemäßer Weise eine Spülleitung 25 in das Gas-Rail 9 (hinein) geführt. Die Spülleitung 25 zweigt hierbei in den Versorgungspfad 21 ein und wird über einen Abschnitt desselben in das Rail 9 geführt, wobei die Spülleitung 25 innerhalb des Gas-Rails 9 wie dargestellt zum Beispiel (T-förmig) verzweigt (so dass vorteilhaft mehrere Auslassenden 25a, b) für ein effektives Spülen auch in Rail-Randbereichen bzw. potentiellen Totzonen bereitstellbar sind). Bevorzugt kann auch die Spülleitung 25 als Schlauch, allgemein als Leitung bereitgestellt sein. Z.B. kann die Spülleitung auch mittels eines Rohres im Rail 9 sowie einer daran kommunizierend angebundenen Leitung oder eines Schlauches gebildet sein.

Wie auch in Fig. 2 gezeigt, ist bei der Gasmotoranordnung 1 vorgesehen, die Spülleitung 25 an einem einwandig ausgeführten Abschnitt des Versorgungspfads 21 an demselben anzubinden, so dass der Aufwand einer Durchbrechung der Doppelwand des Kraftstoffsystemteils 7 vorteilhaft entfällt.

Erfindungsgemäß ist die derart ausgestaltete Gasmotoranordnung 1 weiterhin eingerichtet, Brenngas oder ein zweites Gas selektiv an die Spülleitung 25 zu versorgen. Hierzu weist die Gasmotoranordnung 1 eine (Druck-)Gasversorgung 27 für das zweite Gas auf, welches bei der Erfindung bevorzugt ein (druckbeaufschlagtes) inertes bzw. Inertgas ist, insbesondere Stickstoff. Die Gasversorgung 27 kann zum Beispiel mittels einer oder mehrerer Druckgasflaschen gebildet sein, alternativ zum Beispiel auch in Form eines Gasnetzanschlusses bereitgestellt sein.

Für die selektive Versorgung von Brenngas und alternativ zweiten Gases an die Spülleitung 25 weist die Gasmotoranordnung 1 ferner eine Ventilvorrichtung 29 auf, welche bevorzugt als ein einziges Ventil bereitgestellt ist. An die Ventilvorrichtung 29, welche bevorzugt über die Steuerung 23 steuer- bzw. schaltbar ist, s. gestrichelte Steuerleitung in Fig. 2, ist einerseits eine Versorgungsleitung 31 seitens der Gasversorgung 27 des zweiten Gases geführt, andererseits eine Versorgungsleitung bzw. ein Brenngaszweig 33, welche(r) zwischen der Brenngasversorgung 17 der Gasregelstrecke 15 und deren Absperrvorrichtung 19 abzweigt, das heißt stromaufwärts der Absperrvorrichtung 19.

Die Ventilvorrichtung 29, ausgeführt zum Beispiel mittels eines Kugelhahns oder allgemein zum Beispiel als 3/3-Wege-Ventil, ist hierbei zur Einnahme einer ersten Schaltstellung befähigt, bei welcher Brenngas über die Ventilvorrichtung 29 an die Spülleitung 25 versorgbar ist. Hierzu wird der Brenngaszweig 33 in der ersten Schaltstellung auf die Spülleitung 25 geschaltet, das heißt in Kommunikation mit derselben. Ersichtlich liegt hierbei Versorgungs- bzw. Quellendruck der Brenngasversorgung 17 an dem Brenngaszweig 33 sowie der Spülleitung 25 an.

Weiterhin ist die Ventilvorrichtung 29 eingerichtet, in einer zweiten Stellung das zweite Gas an die Spülleitung 25 zu versorgen. In der zweiten Schaltstellung wird insoweit der Brenngaszweig 33 abgesperrt und die Versorgungsleitung 31 des zweiten Gases in Fluidkommunikation mit der Spülleitung 25 geschaltet. Hierbei liegt der Versorgungs- bzw. Quellendruck der Gasversorgung 27 des zweiten Gases an der Spülleitung 25 an.

In einer dritten Stellung der Ventilvorrichtung 29 sperrt die Ventilvorrichtung 29, das heißt die Spülleitung 25 ist einlassseitig versperrt, der Brenngaszweig 33 als auch die Versorgungsleitung 31 darüber hinaus je an deren Abström- bzw. Ventil(vorrichtungs)seite.

Die - derart ausgestaltete - Gasmotoranordnung 1 ist hierbei erfindungsgemäß weiterhin auch eingerichtet, Brenngas oder zweites Gas an die Spülleitung 25 zu versorgen und mit der Versorgung bzw. Zufuhr des Brenngases oder zweiten Gases an die Spülleitung 25 Gas aus dem Gas-Rail 9 zu verdrängen, weiterhin das verdrängte Gas über den Versorgungspfad 21 abzuführen.

Das über den Versorgungspfad 21 abgeführte Gas, i.e. hin zur Gasregelstrecke 15 abgeführtes Gas, kann nachfolgend bevorzugt über die hierfür geeignet ausgestaltete Gasregelstrecke 15 freigesetzt werden, insbesondere an die Umgebung, wozu die Gasregelstrecke 15 bevorzugt eine - insbesondere über die Steuervorrichtung 23 steuerbare - Abströmvorrichtung 35 mit einem Abblasventil aufweist. Das mittels des Brenngases oder des zweiten Gases verdrängte Gas kann im Rahmen der vorliegenden Erfindung fallweise insbesondere Brenngas oder zweites Gas sein.

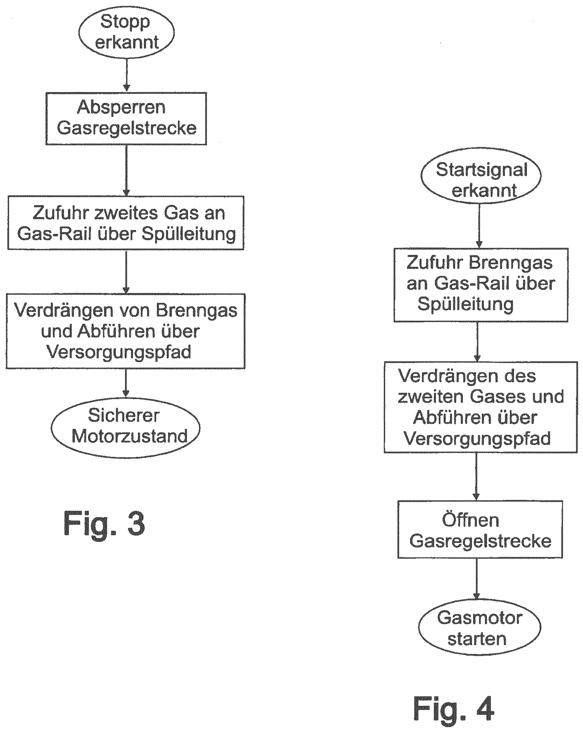

Die derart ausgestaltete Gasmotoranordnung 1 ermöglicht auf vorteilhaft einfache Weise ein zügiges Befüllen des Gas-Rails 9 mit zweitem Gas (Inertgas), insbesondere bei einem Notstopp, so dass die Motorsicherheit prompt hergestellt wird, andererseits aber auch ein rasches (Wieder-) Befüllen des Gas-Rails 9 mit Brenngas, insbesondere bei einer Inbetriebnahme des Gasmotors 3, so dass auch diese nahezu verzugslos erfolgen kann. Hierauf wird nachfolgend insbesondere in Zusammenschau mit den verfahrensbezogenen Figuren 3 und 4 näher eingegangen.

**Fig. 3** veranschaulicht das mit der Gasmotoranordnung 1 insbesondere bei einem Notstopp ausführbare Verfahren, bei welchem Brenngas aus dem Gas-Rail 9 und dem Versorgungspfad 21 gespült bzw. verdrängt wird und durch das zweite Gas ersetzt wird.

Nach Erkennen der Notstoppsituation, zum Beispiel detektiert durch die Steuervorrichtung 23 (ECU), wird zunächst die gasregelstreckenseitige Brenngasversorgung an das Gas-Rail 9 unterbrochen, wozu bevorzugt die Absperrvorrichtung 19 in Sperrstellung geschaltet wird bzw. schaltet. Im Zusammenhang damit öffnet insbesondere die Abströmvorrichtung 35, so dass das Niederdruckniveau in dem Gas-Rail 9 und dem Versorgungspfad 21 auf Umgebungsdruck (oder z.B. Vordruck in einer Tankvorrichtung) abfällt. Um nunmehr das verbliebene Brenngas aus dem Gas-Rail 9 und dem Versorgungspfad 21 zu verdrängen, wird das zweite Gas nachfolgend an die Spülleitung 25 versorgt. Hierzu wird die Ventilvorrichtung 29 von ihrer Sperrstellung in die zweite Stellung geschaltet, so dass das zweite Gas bzw. Inertgas ausgehend von der Gasversorgung 27 - mit deren Druckniveau, welches über Atmosphärendruck (oder z.B. auch Tankdruck) liegt - an die Spülleitung 25 geschaltet wird. Hiermit wird das Brenngas aus dem Gas-Rail 9 (und dem Versorgungspfad 21) verdrängt und über den Versorgungspfad 21 abgeführt. Das abgeführte Gas wird nachfolgend über die Gasregelstrecke 15 via deren geöffnete Abströmvorrichtung 35 an die Umgebung (oder z.B. eine Tankeinrichtung) freigesetzt, z.B. über einen Schiffskamin.

Um zu erkennen, dass das Brenngas sämtlich in beabsichtiger Weise verdrängt wurde, kann die Gasmotoranordnung 1 bevorzugt wenigstens eine Sensiereinrichtung 37 aufweisen, welche zum Beispiel mit der ECU 23 gekoppelt ist, und bevorzugt geeignet ist, Brenngas im verdrängten Gas zu sensieren. Die Sensiereinrichtung 37 kann hierbei in einem seitens der Gasregelstrecke 15 über die Abströmvorrichtung 35 geführten Abströmweg 39 angeordnet sein, s. Fig. 2.

Detektiert die Sensiereinrichtung 37 im Rahmen des Verdrängens von Brenngas beispielsweise, dass kein Brenngas über den Abströmweg 39 mehr abströmt, kann diese ein entsprechendes Signal an die Steuerung 23 senden, woraufhin diese die Befüllung des Gas-Rails 9 mit dem zweiten Gas ggf. stoppt, insbesondere die Ventilvorrichtung 29 hierzu in die dritte Stellung schaltet (bei ermöglichter Bestromung). Alternativ oder zusätzlich kann anstelle der Sensiervorrichtung 37 z.B. auch eine Zeitsteuerung vorgesehen sein, bei welcher die Ventilvorrichtung 29 nach einer vorbestimmten Zeit umgeschaltet wird.

**Fig. 4** veranschaulicht nunmehr ein Verfahren zur Ausführung mit der Gasmotoranordnung 1 im Rahmen einer (Wieder-)Inbetriebnahme des Gasmotors 3.

Um bei erkanntem Startsignal vor einer Wiederinbetriebnahme das zweite Gas aus dem Gas-Rail 9 zu verdrängen, wird zunächst Brenngas an die Spülleitung 25 versorgt. Hierzu wird die Ventilvorrichtung 29 in die erste Stellung geschaltet, während die Absperrvorrichtung 19 insbesondere in Sperrstellung geschaltet ist. Weiterhin wird insbesondere die Abströmvorrichtung 35 geöffnet, so dass einerseits das Brenngas - beaufschlagt mit dem Versorgungs- bzw. Quellendruck - über den Brenngaszweig 33, die Ventilvorrichtung 29 und die Spülleitung 25 an das Gas-Rail 9 geführt bzw. versorgt wird und andererseits das verdrängte (zweite) Gas über die Abströmvorrichtung 35 in die Umgebung entlassen wird.

Sobald das zweite Gas wie beabsichtigt verdrängt ist - wiederum detektierbar zum Beispiel mittels der Sensiereinrichtung 35 oder z.B. zeitgesteuert - kann in einem zweiten Schritt Brenngas nunmehr über die Gasregelstrecke 15 und den Versorgungspfad 21 an das Gas-Rail 9 versorgt werden. Im Zusammenhang damit wird einerseits die Brenngasversorgung an die Spülleitung 25 über den Zweig 33 beendet, indem die Ventilvorrichtung 21 in Sperrstellung geschaltet wird und andererseits die Absperrvorrichtung 19 geöffnet (und die Abströmvorrichtung 35 gesperrt).

Angemerkt sei noch, dass im Rahmen der Gasmotoranordnung 1 insbesondere vorgeschlagen wird, die Absperrvorrichtung 19 stromlos sperrend einzurichten. Derart wird das Nachströmen von Brenngas in die Gasregelstrecke 15 im Falle eines Notstopps mit insbesondere Stromversorgungsunterbrechung sofort wirksam unterbunden. In gleicher Weise ist es auch vorgesehen, die Ventilvorrichtung 29 stromlos in die zweite Stellung schaltend einzurichten, so dass bei einem Notstopp selbsttätig zweites Gas in das Gas-Rail 9 über die Spülleitung 25 (und die Versorgungsleitung 31) einströmt. Auch die Abströmvorrichtung 35 ist bevorzugt stromlos öffnend eingerichtet, so dass dem über die Spülleitung 25 einströmenden zweiten Gas vorteilhaft lediglich Atmosphärendruck entgegenwirkt und eine unproblematische Verdrängung des Brenngases aus dem Gas-Rail 9 erfolgen kann.

## Patentansprüche

1. Gasmotoranordnung (1) aufweisend:
- einen Gasmotor (3);
- ein Gas-Rail (9), über welches ein erstes Gas in Form von Brenngas an wenigstens eine Gasdosiervorrichtung (11) des Gasmotors (3) versorgbar ist;
- eine Gasregelstrecke (15), welche eingerichtet ist, Brenngas über einen abströmseitigen Versorgungspfad (21) an das Gas-Rail (9) zu versorgen;
**dadurch gekennzeichnet, dass**
- eine Spülleitung (25) in das Gas-Rail (9) geführt ist;
- die Gasmotoranordnung (1) eingerichtet ist, selektiv Brenngas oder ein zweites Gas an die Spülleitung (25) zu versorgen; und
- die Gasmotoranordnung (1) eine Ventilvorrichtung (29) aufweist, über welche das erste oder zweite Gas an die Spülleitung (25) selektiv versorgbar ist;
- die Gasmotoranordnung (1) eingerichtet ist, mit der Versorgung des Brenngases oder zweiten Gases an die Spülleitung (25) Gas aus dem Gas-Rail (9) zu verdrängen und über den Versorgungspfad (21) abzuführen;
- die Gasregelstrecke (15) eine Abströmvorrichtung (35) aufweist, über welche verdrängtes und über den Versorgungspfad (21) abgeführtes Gas freisetzbar oder in einen Tank abgebbar ist; und
- die Gasregelstrecke (15) anströmseitig über eine Absperrvorrichtung (19) absperrbar ist; stromaufwärts der Absperrvorrichtung (19) ein Brenngaszweig (33) an die Ventilvorrichtung (29) geführt abzweigt.

2. Gasmotoranordnung (1) nach Anspruch 1,
**dadurch gekennzeichnet, dass**
- die Spülleitung (25) in den Versorgungspfad (21) einzweigt; und/oder
- die Spülleitung (25) über den Versorgungspfad (21) in das Gas-Rail (9) geführt ist; und/oder
- der Versorgungspfad (21) einfach umwandet ausgeführt ist und/oder am Ort einer Einzweigung der Spülleitung (25) einfach umwandet ausgeführt ist.

3. Gasmotoranordnung (1) nach einem der vorhergehenden Ansprüche,
**dadurch gekennzeichnet, dass**
- die Gasmotoranordnung (1) eingerichtet ist, aus dem Gas-Rail (9) verdrängtes und über den Versorgungspfad (21) abgeführtes Gas weiterhin über die Gasregelstrecke (15) abzuführen und/oder freizusetzen.

4. Gasmotoranordnung (1) nach einem der vorhergehenden Ansprüche,
**dadurch gekennzeichnet, dass**
- das zweite Gas ein Inertgas ist.

5. Gasmotoranordnung (1) nach einem der vorhergehenden Ansprüche,
**dadurch gekennzeichnet, dass**
- die Gasmotoranordnung (1) eingerichtet ist, in einer ersten Stellung der Ventilvorrichtung (29) Brenngas an die Spülleitung (25) zu versorgen;
- die Gasmotoranordnung (1) eingerichtet ist, in einer zweiten Stellung der Ventilvorrichtung (29) das zweite Gas an die Spülleitung (25) zu versorgen;
- die Gasmotoranordnung (1) eingerichtet ist, die Ventilvorrichtung (29) in eine dritte Stellung entsprechend einer Sperrstellung zu schalten.

6. Gasmotoranordnung (1) nach einem der vorhergenden Ansprüche,
**dadurch gekennzeichnet, dass**
- die Gasmotoranordnung (1) eingerichtet ist, für ein selektives Verdrängen von Gas mittels Brenngas die Absperrvorrichtung (19) in Sperrstellung zu schalten und Brenngas über den Brenngaszweig (33) und die Ventilvorrichtung (29) an die Spülleitung (25) zu versorgen.

7. Gasmotoranordnung (1) nach einem der vorhergehenden Ansprüche,
**dadurch gekennzeichnet, dass**
- die Gasmotoranordnung (1) eingerichtet ist, nach einem Verdrängen von Gas mittels Brenngas die Ventilvorrichtung (29) in Sperrstellung zu schalten und nachfolgend die Absperrvorrichtung (19) zu öffnen.

8. Gasmotoranordnung (1) nach einem der vorhergehenden Ansprüche,
**dadurch gekennzeichnet, dass**
- die Gasmotoranordnung (1) eingerichtet ist, für eine Versorgung des zweiten Gases an die Spülleitung (25) die Absperrvorrichtung (19) in Sperrstellung und die Ventilvorrichtung (29) in die zweite Stellung zu schalten und das zweite Gas über die Ventilvorrichtung (29) an die Spülleitung (25) zu versorgen.

9. Gasmotoranordnung (1) nach einem der vorhergehenden Ansprüche,
**dadurch gekennzeichnet, dass**
- die Absperrvorrichtung (19) stromlos sperrt; und/oder
- die Ventilvorrichtung (29) stromlos in die zweite Stellung schaltet; und/oder
- die Abströmvorrichtung (35) stromlos öffnet.

10. Gasmotoranordnung (1) nach einem der vorhergehenden Ansprüche,
**dadurch gekennzeichnet, dass**
- die Gasmotoranordnung (1) eingerichtet ist, bei einer Unterbrechung der Stromversorgung und/oder einem Außerbetriebsetzen eine Kommunikationsverbindung von einer Gasversorgung (27) des zweiten Gases über die Spülleitung (25), das Rail (9) sowie den Versorgungspfad (21) zu schalten.

11. Gasmotoranordnung (1) nach einem der vorhergehenden Ansprüche,
**dadurch gekennzeichnet, dass**
- die Gasmotoranordnung (1) für eine Steuerung der Gasversorgung an das Gas-Rail (9) über die Spülleitung (25) eine Gassensorik (37) aufweist oder für eine Zeitsteuerung eingerichtet ist.

12. Verfahren zur Ausführung mit einer Gasmotoranordnung (1) nach einem der vorhergehenden Ansprüche,
**dadurch gekennzeichnet, dass**
- zur Einnahme eines sicheren Gasmotorzustands im Zuge eines Außerbetriebsetzens in einem ersten Schritt eine gasregelstreckenseitige Brenngasversorgung an das Gas-Rail (9) unterbrochen wird;
- in einem zweiten Schritt das zweite Gas an die Spülleitung (25) versorgt und Brenngas aus dem Gas-Rail (9) verdrängt und über den Versorgungspfad (21) abgeführt wird.

13. Verfahren nach Anspruch 12,
**dadurch gekennzeichnet, dass**
- der zweite Schritt beendet wird, sobald das Gas-Rail (9) mit dem zweiten Gas befüllt ist.

14. Verfahren zur Ausführung mit einer Gasmotoranordnung (1) nach einem der Ansprüche 1 bis 11,
**dadurch gekennzeichnet, dass**
- zur Inbetriebnahme des Gasmotors (3) Brenngas über den Brenngaszweig (33) an die Spülleitung (25) versorgt wird, so dass Gas aus dem Gas-Rail (9) verdrängt wird;
- nach Verdrängen des Gases mittels des Brenngases in einem zweiten Schritt Brenngas über die Gasregelstrecke (15) und den Versorgungspfad (21) an das Gas-Rail (9) versorgt wird.

15. Verfahren nach Anspruch 14,
**dadurch gekennzeichnet, dass**
- nach Befüllen des Gas-Rails (9) mit Brenngas über den Brenngaszweig (33) die Brenngasversorgung an die Spülleitung (25) über den Brenngaszweig (33) beendet wird und/oder die Ventilvorrichtung (29) in Sperrstellung geschaltet wird.

## Claims

1. Gas engine arrangement (1) having:
- a gas engine (3);
- a gas rail (9), via which a first gas in the form of fuel gas can be supplied to at least one gas metering device (11) of the gas engine (3);
- a gas control section (15), which is designed to supply fuel gas to the gas rail (9) via a supply path (21) on the outflow side;
**characterized in that**
- a purge line (25) is passed into the gas rail (9);
- the gas engine arrangement (1) is designed to selectively supply fuel gas or a second gas to the purge line (25); and
- the gas engine arrangement (1) has a valve device (29), by means of which the first or second gas can be supplied selectively to the purge line (25);
- the gas engine arrangement (1) is designed to displace gas from the gas rail (9) and to discharge it via the supply path (21) when the fuel gas or second gas is supplied to the purge line (25);
- the gas control section (15) has an outflow device (35), via which displaced gas discharged via the supply path (21) can be released or discharged into a tank; and
- the gas control section (15) can be shut off by means of a shutoff device (19) on the inflow side; a fuel gas branch (33) leading to the valve device (29) branches off upstream of the shutoff device (19).

2. Gas engine arrangement (1) according to Claim 1,
**characterized in that**
- the purge line (25) branches into the supply path (21); and/or
- the purge line (25) is passed into the gas rail (9) via the supply path (21); and/or
- the supply path (21) is embodied with a single surrounding wall and/or is embodied with a single surrounding wall at the location of an inwardleading branch of the purge line (25).

3. Gas engine arrangement (1) according to one of the preceding claims,
**characterized in that**
- the gas engine arrangement (1) is designed furthermore to discharge and/or release, via the gas control section (15), gas displaced from the gas rail (9) and discharged via the supply path (21).

4. Gas engine arrangement (1) according to one of the preceding claims,
**characterized in that**
- the second gas is an inert gas.

5. Gas engine arrangement (1) according to one of the preceding claims,
**characterized in that**
- the gas engine arrangement (1) is designed to supply fuel gas to the purge line (25) in a first position of the valve device (29);
- the gas engine arrangement (1) is designed to supply the second gas to the purge line (25) in a second position of the valve device (29);
- the gas engine arrangement (1) is designed to switch the valve device (29) to a third position corresponding to a blocking position.

6. Gas engine arrangement (1) according to one of the preceding claims,
**characterized in that**
- the gas engine arrangement (1) is designed to switch the shutoff device (19) into the blocking position for selective displacement of gas by means of fuel gas and to supply fuel gas to the purge line (25) via the fuel gas branch (33) and the valve device (29).

7. Gas engine arrangement (1) according to one of the preceding claims,
**characterized in that**
- the gas engine arrangement (1) is designed to switch the valve device (29) into the blocking position after displacement of gas by means of fuel gas and then to open the shutoff device (19).

8. Gas engine arrangement (1) according to one of the preceding claims,
**characterized in that**
- the gas engine arrangement (1) is designed to switch the shutoff device (19) into the blocking position and to switch the valve device (29) into the second position to supply the second gas to the purge line (25), and to supply the second gas to the purge line (25) via the valve device (29).

9. Gas engine arrangement (1) according to one of the preceding claims,
**characterized in that**
- the shutoff device (19) is shut off when deenergized; and/or
- the valve device (29) switches into the second position when deenergized; and/or
- the outflow device (35) opens when deenergized.

10. Gas engine arrangement (1) according to one of the preceding claims,
**characterized in that**
- the gas engine arrangement (1) is designed to switch a communicating connection from a gas supply (27) for the second gas via the purge line (25), the rail (9) and the supply path (21) in the event of an interruption in the power supply and/or a shutdown.

11. Gas engine arrangement (1) according to one of the preceding claims,
**characterized in that**
- the gas engine arrangement (1) has a gas sensor system (37) for control of the gas supply to the gas rail (9) via the purge line (25) or is designed for timer control.

12. Method for implementation with a gas engine arrangement (1) according to one of the preceding claims,
**characterized in that**
- in order to adopt a safe gas engine state in the course of a shutdown, a fuel gas supply to the gas rail (9) from the gas control section is interrupted in a first step;
- the second gas is supplied to the purge line (25) and fuel gas is displaced from the gas rail (9) and discharged via the supply path (21) in a second step.

13. Method according to Claim 12,
**characterized in that**
- the second step is ended as soon as the gas rail (9) has been filled with the second gas.

14. Method for implementation with a gas engine arrangement (1) according to one of Claims 1 to 11,
**characterized in that**
- in order to start the gas engine (3), fuel gas is supplied to the purge line (25) via the fuel gas branch (33), with the result that gas is displaced from the gas rail (9);
- after displacement of the gas by means of the fuel gas, fuel gas is supplied to the gas rail (9) via the gas control section (15) and the supply path (21) in a second step.

15. Method according to Claim 14,
**characterized in that**
- after filling of the gas rail (9) with fuel gas via the fuel gas branch (33), the fuel gas supply to the purge line (25) via the fuel gas branch (33) is ended and/or the valve device (29) is switched into the blocking position.

## Revendications

1. Système de moteur à gaz (1), comprenant:
- un moteur à gaz (3);
- un rail de gaz (9), par lequel un premier gaz peut être fourni sous forme de gaz combustible à au moins un dispositif de dosage de gaz (11) du moteur à gaz (3) ;
- une section de réglage de gaz (15), qui est conçue pour fournir du gaz combustible au rail de gaz (9) par un chemin d'alimentation aval (21);
**caractérisé en ce que**
- une conduite de balayage (25) est menée dans le rail de gaz (9);
- le système de moteur à gaz (1) est conçu pour fournir de façon sélective du gaz combustible ou un deuxième gaz à la conduite de balayage (25); et
- le système de moteur à gaz (1) présente un dispositif de vanne (29), par lequel le premier gaz ou le deuxième gaz peut être fourni de façon sélective à la conduite de balayage (25);
- le système de moteur à gaz (1) est conçu pour refouler du gaz hors du rail de gaz (9) par la fourniture du gaz combustible ou du deuxième gaz à la conduite de balayage (25) et pour l'évacuer par le chemin d'alimentation (21);
- la section de réglage de gaz (15) présente un dispositif d'échappement (35), par lequel du gaz refoulé et du gaz évacué par le chemin d'alimentation (21) peuvent être libérés ou envoyés dans un réservoir; et
- la section de réglage de gaz (15) peut être fermée à l'entrée par un dispositif de fermeture (19); un branchement de gaz combustible (33) en amont du dispositif de fermeture (19) mène au dispositif de vanne (29).

2. Système de moteur à gaz (1) selon la revendication 1, **caractérisé en ce que**:
- la conduite de balayage (25) débouche dans le chemin d'alimentation (21), et/ou
- la conduite de balayage (25) est menée dans le rail de gaz (9) via le chemin d'alimentation (21); et/ou
- le chemin d'alimentation (21) est réalisé avec un gainage simple et/ou est réalisé avec un gainage simple à l'endroit où la conduite de balayage (25) débouche.

3. Système de moteur à gaz (1) selon l'une quelconque des revendications précédentes, **caractérisé en ce que**
- le système de moteur à gaz (1) est conçu pour évacuer et/ou libérer en outre par la section de réglage de gaz (15) du gaz refoulé hors du rail de gaz (9) et évacué par le chemin d'alimentation (21).

4. Système de moteur à gaz (1) selon l'une quelconque des revendications précédentes, **caractérisé en ce que**
- le deuxième gaz est un gaz inerte.

5. Système de moteur à gaz (1) selon l'une quelconque des revendications précédentes, **caractérisé en ce que**
- le système de moteur à gaz (1) est conçu pour, dans une première position du dispositif de vanne (29), fournir du gaz combustible à la conduite de balayage (25) ;
- le système de moteur à gaz (1) est conçu pour, dans une deuxième position du dispositif de vanne (29), fournir le deuxième gaz à la conduite de balayage (25) ;
- le système de moteur à gaz (1) est conçu pour commuter le dispositif de vanne (29) dans une troisième position correspondant à une position de fermeture.

6. Système de moteur à gaz (1) selon l'une quelconque des revendications précédentes, **caractérisé en ce que**
- le système de moteur à gaz (1) est conçu pour commuter le dispositif de fermeture (19) en position de fermeture en vue d'un refoulement sélectif de gaz au moyen de gaz combustible et pour fournir du gaz combustible à la conduite de balayage (25) via le branchement de gaz combustible (33) et le dispositif de vanne (29).

7. Système de moteur à gaz (1) selon l'une quelconque des revendications précédentes, **caractérisé en ce que**
- le système de moteur à gaz (1) est conçu pour commuter le dispositif de vanne (29) en position de fermeture après un refoulement de gaz au moyen de gaz combustible et pour ouvrir ensuite le dispositif de fermeture (19).

8. Système de moteur à gaz (1) selon l'une quelconque des revendications précédentes, **caractérisé en ce que**
- le système de moteur à gaz (1) est conçu pour commuter le dispositif de fermeture (19) en position de fermeture et le dispositif de vanne (29) dans la deuxième position en vue d'une fourniture du deuxième gaz à la conduite de balayage (25) et pour fournir le deuxième gaz à la conduite de balayage (25) via le dispositif de vanne (29).

9. Système de moteur à gaz (1) selon l'une quelconque des revendications précédentes, **caractérisé en ce que**
- le dispositif de fermeture (19) se ferme sans courant; et/ou
- le dispositif de vanne (29) se commute sans courant dans la deuxième position; et/ou
- le dispositif d'échappement (35) s'ouvre sans courant.

10. Système de moteur à gaz (1) selon l'une quelconque des revendications précédentes, **caractérisé en ce que**
- le système de moteur à gaz (1) est conçu pour, dans le cas d'une interruption de l'alimentation électrique et/ou d'une mise hors service, commuter une liaison de communication d'une fourniture de gaz (27) du deuxième gaz par la conduite de balayage (25), le rail (9) et le chemin d'alimentation (21).

11. Système de moteur à gaz (1) selon l'une quelconque des revendications précédentes, **caractérisé en ce que**
- le système de moteur à gaz (1) présente des capteurs de gaz (37) pour une commande de la fourniture de gaz au rail de gaz (9) par la conduite de balayage (25) ou est conçu pour une commande temporisée.

12. Procédé de mise en oeuvre avec un système de moteur à gaz (1) selon l'une quelconque des revendications précédentes, **caractérisé en ce que**
- pour occuper un état du moteur à gaz sûr dans la foulée d'une mise hors service, on interrompt dans une première étape une fourniture de gaz combustible, du côté de la section de réglage du gaz, au rail de gaz (9);
- dans une deuxième étape, on fournit le deuxième gaz à la conduite de balayage (25) et on refoule du gaz combustible hors du rail de gaz (9) et on l'évacue par le chemin d'alimentation (21).

13. Procédé selon la revendication 12, **caractérisé en ce que**
- on met fin à la deuxième étape, dès que le rail de gaz (9) est rempli du deuxième gaz.

14. Procédé pour la mise en oeuvre avec un système de moteur à gaz (1) selon l'une quelconque des revendications 1 à 11, **caractérisé en ce que**
- pour la mise en service du moteur à gaz (3), on fournit du gaz combustible à la conduite de balayage (25) via le branchement de gaz combustible (33), de telle sorte que du gaz est refoulé hors du rail de gaz (g) ;
- après le refoulement du gaz au moyen du gaz combustible dans une deuxième étape on fournit du gaz combustible au rail de gaz (9) par la zone de réglage de gaz (15) et le chemin d'alimentation (21).

15. Procédé selon la revendication 14, **caractérisé en ce que**
- après le remplissage du rail de gaz (9) avec du gaz combustible via le branchement de gaz combustible (33), on met fin à la fourniture de gaz combustible à la conduite de balayage (25) par le branchement de gaz combustible (33) et/ou on commute le dispositif de vanne (29) dans la position de fermeture.
